# FASCICULE DE BREVET EUROPEEN

(11) **EP 3 098 456 B1**
(45) Date de publication et mention de la délivrance du brevet: **04.10.2017**
(21) Numéro de dépôt: 16170914.2
(22) Date de dépôt: 23.05.2016
(51) Int. Cl.: F15B 13/043, F15B 9/03

(54) **SERVOVALVE À ETAGE PILOTE DU TYPE À JET**
SERVOVENTIL MIT STEUERSTUFFE IN FORM EINES STRAHLROHRS
SERVOVALE WITH PILOT STAGE OF THE JET TYPE

(30) Priorité: 26.05.2015 FR 1554715
(43) Date de publication de la demande: 30.11.2016
(73) Titulaire: Zodiac Hydraulics, 28200 Châteaudun (FR)
(72) Inventeur: MICHEL, Kévin, 64100 Bayonne (FR)
(74) Mandataire: Lavialle, Bruno François Stéphane

(56) Documents cités:
- WO-A1-2012/013808
- US-A- 3 621 880

## Description

L'invention est relative à une servovalve comportant un étage de pilotage de type à jet.

### ARRIERE-PLAN TECHNOLOGIQUE DE L'INVENTION

Une servovalve classique est constituée d'un étage de pilotage pilotant un organe mobile de distribution de puissance d'un étage de puissance. L'étage de puissance a pour fonction de délivrer une pression ou un débit proportionnel à une instruction transmise à l'étage de pilotage.

L'étage de pilotage comporte deux éléments hydrauliques, à savoir un émetteur hydraulique (buse ou éjecteur) et un récepteur hydraulique (palette, déflecteur ou récepteur fixe) dont la modification de leur position relative génère des différentiels de pression qui sont exploités pour déplacer finement un organe mobile de distribution de puissance de l'étage de puissance de la servovalve. Cet organe mobile de distribution de puissance coulisse dans une chemise cylindrique implantée dans le corps de la servovalve. Généralement, la position de l'émetteur ou du récepteur hydraulique est pilotée par un moteur couple qui déplace l'un des éléments hydrauliques de l'étage de pilotage en regard de l'autre. Le déplacement de l'organe mobile de distribution de puissance dans sa chemise met alors en communication un ensemble de canaux forés et de lumières dont l'agencement permet de délivrer une pression ou un débit, proportionnels au déplacement dudit organe mobile de distribution de puissance.

Les servovalves à éjecteur sont bien connues pour leur haute résistance à une pollution du fluide du fait d'une distance plus élevée entre l'éjecteur à fluide et le déflecteur par rapport à la distance séparant les buses et la palette dans une servovalve à buses et palette.

Il est connu de réaliser de telles servovalves à éjecteur en mettant en oeuvre un éjecteur de fluide solidaire d'un élément torsible encastré en au moins une de ses deux extrémités. De telles servovalves requièrent l'utilisation de moteur-couples puissants pour appliquer un couple de torsion sur l'élément torsible afin de déplacer l'éjecteur de fluide. De tels moteur-couples se révèlent pesants et gourmands en énergie électrique.

Un autre inconvénient connu des servovalves avec étage de pilotage à jet est qu'il faut canaliser le fluide jusqu'à l'éjecteur en passant par-dessus l'étage de puissance de la servovalve et son organe mobile de distribution de puissance. Ceci oblige de prévoir de couteux usinages qui, au vu des fortes pressions du fluide d'alimentation, imposent de prévoir des surépaisseurs conséquentes de matière exclusivement réservées à l'accueil de la canalisation d'amenée de fluide à l'éjecteur. Ainsi, il existe une part du volume de la servovalve, et donc de son poids, qui est dédiée à la réalisation de ce conduit.

Une servovalve selon le préambule de la revendication 1 est connue de WO 2012/013808.

### OBJET DE L'INVENTION

L'invention a pour objet de réduire le poids d'une servovalve à éjecteur.

### BREVE DESCRIPTION DE L'INVENTION

En vue de la réalisation de ce but, on propose une servovalve à étage de pilotage de type à jet comportant un éjecteur pour éjecter un jet de fluide et qui est déplaçable en regard d'un déflecteur apte à générer un différentiel de pression exploitable pour déplacer un organe de distribution de puissance de la servovalve. L'éjecteur s'étend radialement en saillie d'une colonne s'étendant selon un axe longitudinal et de laquelle l'éjecteur est solidaire en étant en communication fluidique avec un conduit central de la colonne par lequel l'éjecteur est alimenté en fluide. La colonne a une première extrémité engagée de manière pivotante dans une partie de la servovalve à proximité d'une alimentation en pression de celle-ci et par laquelle le fluide est introduit dans le conduit central de la colonne. La colonne a une deuxième extrémité soumise à la sollicitation d'un moteur couple pour sélectivement appliquer sur la colonne un couple de rotation autour de l'axe longitudinal dans un sens ou dans un autre par rapport à une position de repos.

La sollicitation de la colonne se faisant en rotation et non en torsion, les efforts à appliquer sur celle-ci sont réduits et il est possible de mettre en oeuvre un moteur couple de puissance, et donc de masse, réduite.

Avantageusement, la servovalve comprend des moyens élastiques de retour de la colonne en position de repos. Ainsi, le retour de la colonne en position de repos est plus rapide que sous l'influence seule des éléments magnétiques du moteur couple. Selon un mode de réalisation particulier, les moyens de retour en position comprennent un tube fin entourant la colonne.

Avantageusement encore, la première extrémité de la colonne réalise une liaison pivot glissant avec un logement de réception de ladite extrémité. Ceci permet de simplifier les opérations d'assemblage de la colonne en évitant d'avoir à réaliser un arrêt en translation de la colonne selon son axe longitudinal.

De manière particulièrement pratique, le logement de réception comprend une fourrure rapportée de manière étanche sur un corps de la servovalve. Ceci permet de faciliter les opérations d'ajustage et d'appariement de la colonne et son logement de réception en évitant de réaliser un ajustage sur le corps même de la servovalve.

Avantageusement, la fourrure est maintenue en position par vissage.

### BREVE DESCRIPTION DES FIGURES

L'invention sera mieux comprise à la lumière de la description qui suit d'un mode particulier de réalisation de l'invention, en référence aux figures suivantes :
- la figure 1 est un schéma de principe de l'application de l'invention à une servovalve selon un premier mode particulier de réalisation de l'invention, le moteur couple ayant été omis ;
- la figure 2 est une vue de détail en coupe de la zone II-II identifiée sur la figure 1 ;
- la figure 3 est une vue en coupe selon la ligne III-III de la figure 4 d'une servovalve selon un deuxième mode particulier de réalisation de l'invention ;
- la figure 4 est une vue en coupe selon la ligne IV-IV de la figure 3 ;
- la figure 5 est une vue analogue à celle de la figure 4, le moteur couple ayant été représenté ;
- la figure 6 est une vue de côté partielle de la servovalve des figures 2 à 5 ;
- la figure 7 est un schéma de principe montrant les polarisations respectives de la palette et du stator de la servovalve.

### DESCRIPTION DETAILLEE DES FIGURES

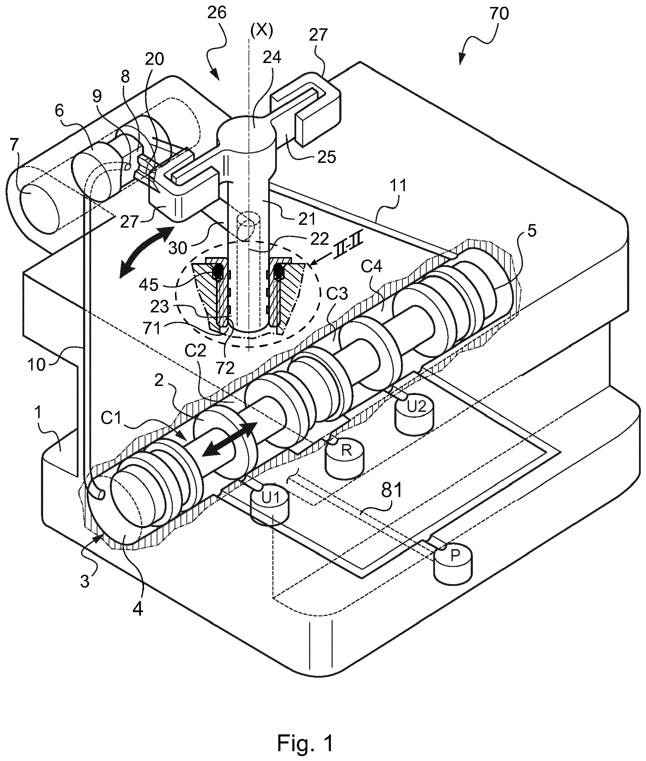

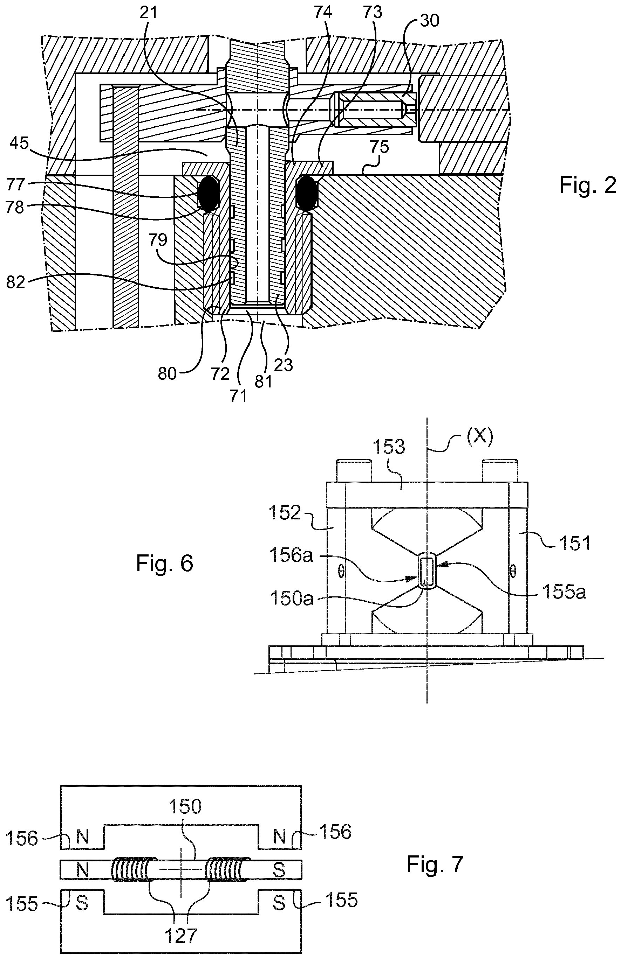

En référence aux figures 1 et 2, l'invention est ici illustrée en application à une servovalve de régulation de débit barométrique à deux étages dont un étage de pilotage. Bien entendu, l'invention n'est pas limitée à cette application, et pourra être utilisée pour d'autres types de servovalves.

La servovalve généralement désignée 70 comporte un corps 1 dans lequel un organe de distribution de puissance 2 est monté pour coulisser à étanchéité dans un orifice cylindrique 3 en formant l'étage de distribution. L'organe de distribution de puissance 2 est mobile entre deux positions extrêmes et est conformé pour délimiter dans l'orifice 3 des chambres étanches C1, C2, C3, C4 pour mettre en communication respectivement, selon la position extrême de l'organe de distribution de puissance 2 par rapport à une position centrée (ou position neutre) :
- soit un port d'alimentation P avec un premier port d'utilisation U1, et un port de retour R avec un deuxième port d'utilisation U2,
- soit le port d'alimentation P avec le deuxième port d'utilisation U2, et le port de retour R avec le premier port d'utilisation U1. Le contrôle du coulissement de l'organe de distribution de puissance 2 dans l'orifice 3 est assuré au moyen de chambres de pilotage 4,5 qui sont alimentées en fluide sous pression par un organe de répartition de pression, en l'occurrence ici un déflecteur 6 engagé à étanchéité dans un logement 7 du corps 1. Le déflecteur 6 comporte un méplat central 8 dans lequel un orifice de répartition 9 est pratiqué. L'orifice de répartition 9 est mis en communication, via des conduits 10,11 avec les chambres de pilotage 4 et 5. Des ressorts (non représentés) sont prévus pour exercer une contre réaction aux pressions de pilotages induites sur l'organe de distribution de puissance 2, afin de pouvoir asservir en position celui-ci.

En regard du méplat central 8 s'étend un éjecteur 20 à fluide qui éjecte un jet de fluide vers l'orifice de répartition 9. L'éjecteur 20 est déplaçable en regard de l'orifice de répartition 9 de sorte à déplacer le point d'impact du jet sur le méplat central 8, ce qui a pour effet de faire varier les pressions régnant dans les chambres de pilotage 4, 5 ce qui permet de déplacer l'organe de distribution de puissance en réponse au déplacement de l'éjecteur 20. Tout ceci est bien connu et n'est rappelé que pour situer le contexte de l'invention.

Selon un aspect essentiel de l'invention, l'éjecteur 20 est solidaire d'une colonne 21 et est fixé en extrémité d'une tubulure 30 qui s'étend radialement de celle-ci en étant en communication fluidique avec un conduit central 22 de la colonne 21 par lequel l'éjecteur 20 est alimenté en fluide. La colonne 21 s'étend selon un axe longitudinal X et comporte une première extrémité 23 qui est engagée de manière pivotante dans un logement de réception 71 du corps 1 de la servovalve 70.

Ce logement de réception 71 est délimité par une fourrure 72 rapportée ici par vissage dans le corps 1 de la servovalve 70. La fourrure 72 est de forme cylindrique d'axe X et comprend une portion 73 en forme de disque en sa première extrémité 74 et qui vient reposer sur une portion plane 75 d'une chambre 45 dans laquelle s'étend la tubulure 30. La face extérieure de la fourrure 72 comprend un joint torique 77 reçu dans un logement annulaire 78 du corps 1 de la servovalve 70 et qui assure l'étanchéité de la fourrure 72 sur le corps 1. La fourrure 72 comprend un alésage axial 79 s'étendant depuis la première extrémité 74 de la fourrure jusqu'à sa deuxième extrémité 80 et dans lequel est engagée à rotation et à coulissement la première extrémité 23 de la colonne 21. La liaison ainsi définie entre le corps 1 de la servovalve 70 et la colonne 21 correspond à une liaison pivot glissant. L'alésage 79 s'étend entre la chambre 45 et un conduit d'alimentation 81 en lien fluidique avec le port d'alimentation P de manière à alimenter le conduit central 22 de la colonne 21. Le conduit d'alimentation 81 est illustré en pointillé sur la figure 1 et peut être directement foré dans le corps 1 de la servovalve 70. La première extrémité 23 de la colonne 21 est idéalement implantée dans une partie du corps 1 à proximité de l'alimentation en pression. Ceci permet de supprimer la nécessité de faire passer un ou des conduits d'alimentation de l'éjecteur 20 par-dessus l'ensemble de distribution.

Comme visible en figure 2, la surface extérieure de l'extrémité 23 de la colonne 21 comprend trois gorges 82 périphériques de détente. Ces gorges 82 ainsi que l'ajustement diamétral de la colonne 23 dans l'alésage 79 permettent de maitriser la fuite interne de fluide entre le conduit 81 et la chambre 45.

La colonne 21 comporte une deuxième extrémité 24 qui est solidaire du rotor 25 d'un moteur couple 26 dont le stator 27 est fixé sur le corps 1.

Ainsi, lorsque le moteur couple 26 est alimenté, il provoque une rotation de la colonne 21 autour de son axe longitudinal X, provoquant un déplacement angulaire de l'éjecteur 20 en regard de l'orifice de répartition 9 de sorte que l'impact du jet produit par l'éjecteur 20 se déplace relativement à l'orifice de répartition 9.

Le déplacement du point d'impact du jet est faible et est assimilable à une translation selon la tangente à la trajectoire de l'éjecteur 20. Une grande proportionnalité est conservée entre ce déplacement et le couple imposé par le moteur couple 26 sur la colonne, et donc avec le courant d'alimentation de celui-ci.

Lorsque le moteur couple 26 n'est pas alimenté, le rotor 25 revient, par équilibrage des masses magnétiques, à sa position de repos et le jet produit par l'éjecteur 20 impacte le méplat central 8 du déflecteur à un endroit pour lequel les pressions dans les chambres de pilotage 4,5 s'équilibrent. A cet effet, le déflecteur 6 est pourvu de moyen de réglage permettant son positionnement précis dans le logement 9 en regard de l'éjecteur. La liaison pivot glissant de la colonne 21 sur le corps 12 de la servovalve oppose une très faible résistance au déplacement de l'éjecteur 20 en regard de l'orifice de répartition 9. La puissance électrique absorbée par le moteur couple 26 est faible en regard des moteur-couples de l'art antérieur. Il est alors possible d'utiliser un moteur couple développant une puissance mécanique plus faible et donc possédant une masse réduite. Cette disposition ainsi que la réduction du volume du corps 1 de la servovalve 70 réservé au conduit d'alimentation 81 permet d'obtenir une servovalve 70 bien plus légère et consommant moins d'énergie électrique que les servovalves de l'art antérieur.

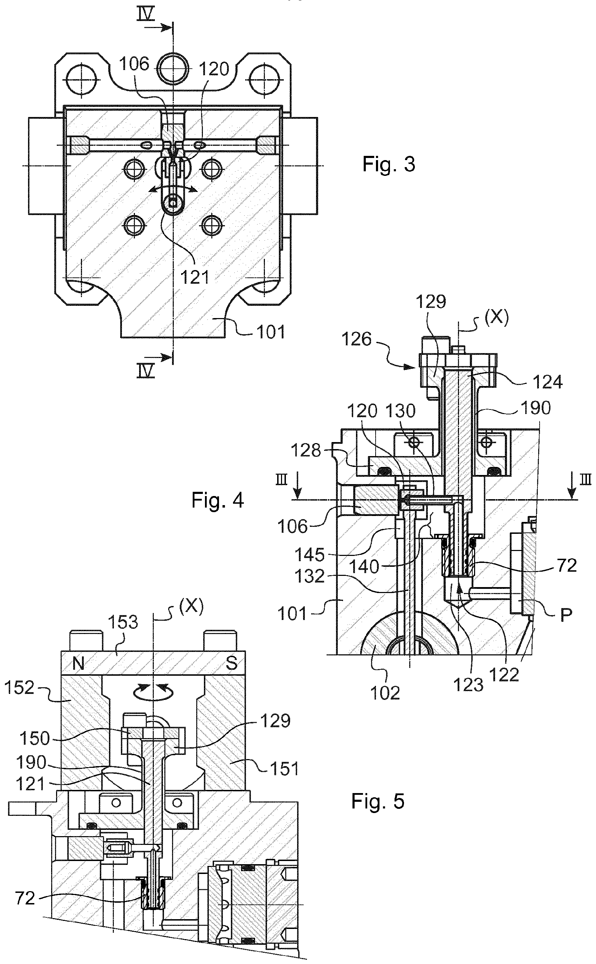

Selon maintenant un deuxième mode particulier de réalisation illustré aux figures 3 et 4, et sur lesquelles les références des éléments communs avec ceux de la figure 1 sont augmentés d'une centaine, la servovalve 170 comporte, comme auparavant, un corps 101 dans lequel un organe de distribution de puissance 102 est monté coulissant. L'étage de pilotage comporte un déflecteur 106 et un éjecteur 120 qui est solidaire d'une colonne 121 en étant monté à l'extrémité d'une tubulure 130 qui s'étend radialement depuis la colonne 121. La colonne 121 a une première extrémité qui réalise une liaison pivot glissant dans le corps 101, et une deuxième extrémité 124 soumise à l'action d'un moteur couple 126. La colonne 121 comporte un conduit central 122 permettant de mettre en communication fluidique l'éjecteur 120 et le port d'alimentation P par la première extrémité 123 via le conduit central 122 et la tubulure 130. On constate ici encore que l'extrémité 23 de la colonne est implantée à proximité de l'alimentation en pression de la servovalve.

Ici et selon un aspect particulier de l'invention, la colonne 121 est entourée d'un tube fin 190 qui s'étend depuis une semelle 128 fixée à étanchéité sur le corps de la servovalve jusqu'à un pied 129 venant enserrer l'extrémité 124 de la colonne. Le pied 129 et ladite extrémité sont fixés l'un à l'autre de sorte que lors d'une rotation provoquée par le moteur couple 126, le tube fin 190 travaille en torsion. Cette disposition permet d'assurer l'étanchéité de la chambre 145 dans laquelle l'éjecteur 120 éjecte le fluide, sans recours à un joint d'étanchéité frottant au niveau de l'extrémité 24 de la colonne coopérant avec le moteur couple 190 et susceptible de créer une hystérésis. Le tube fin 190 ramène de manière élastique la colonne 121 à sa position de repos et permet d'améliorer la réactivité de la servovalve 70 par rapport à un retour à la position de repos exclusivement réalisé par effet magnétique du moteur couple 126 sur le stator 127.

Selon un autre aspect particulier de l'invention, la rétroaction élastique entre l'organe de distribution de puissance 102 et l'éjecteur 120 est ici assurée par une tige 132 flexible s'étendant entre l'éjecteur 120 et le organe de distribution de puissance 102. La tige s'étendant parallèlement à la colonne 121.

Le moteur couple 126 est maintenant détaillé en relation avec les figures 4 à 6. Celui-ci comporte une palette 150 qui comportent deux bras opposés 150a, 150b et qui est reliée au pied 129 par vissage. La palette 150 est entourée d'une armature ferromagnétique comportant deux flancs 151, 152 qui sont reliés en partie supérieur par un aimant permanent 153 polarisé Nord-Sud conformément à la figure 4.

Comme visible à la figure 6, les flancs 151, 152 présentent des faces actives 155, 156 qui viennent immédiatement en regard de faces de la palette 150, ne laissant qu'un petit entrefer, ce, de part et d'autre de l'axe longitudinal X. L'aimant permanent 153 génère alors des flux magnétiques, qui passent par les faces actives 155, 156 et se referment chacun dans l'un des bras de la palette 150 de part et d'autre de l'axe. Les flux étant égaux, la palette ne subit aucun couple.

Des bobines 157, 158 disposées pour entourer chacune l'un des bras de la palette 150 sont alimentées en opposition, il est ainsi produit sur la palette 150 un couple proportionnel au produit de l'intensité d'alimentation des bobines 157 et du nombre de tours de celles-ci pour engendrer un flux magnétique au sein de la palette de manière à obtenir une polarisation Nord sur la partie 150a et une polarisation Sud sur la partie 150b (voir figure 7). Il est de cette façon créé sur la palette 150 un couple provoquant la rotation de la colonne 121 et la torsion du tube 190.

Bien entendu, cette rotation de la colonne 121 est très faible, de l'ordre de quelques dixièmes de degrés. Il suffira d'inverser le sens du courant d'alimentation des bobines pour inverser le sens de la rotation.

L'invention n'est bien sûr pas limitée à ce qui vient d'être décrit, mais englobe toute variante entrant dans le cadre défini par les revendications.

En particulier,
- bien qu'ici la colonne soit montée en parallèle avec un tube fin torsible, on pourra éviter ce montage s'il l'on parvient à assurer l'étanchéité de la chambre dans laquelle l'éjecteur envoie le fluide. En particulier, on pourra utiliser un soufflet, ou un joint capable de se déformer en torsion sans glissement ni frottement et ne présentant pas d'hystérésis ;
- bien qu'ici la fourrure soit rapportée par vissage sur le corps de la servovalve, l'invention s'applique également à d'autres modes de liaison de la fourrure sur le corps de la servovalve comme par exemple le soudage, le collage, le brasage ou le sertissage, certains de ces modes permettant de se passer de joint d'étanchéité ;
- bien qu'ici l'étanchéité soit assurée par un joint torique logé dans une gorge annulaire, l'invention s'applique également à d'autres types de joints d'étanchéité statiques comme par exemple un joint plat ou de section quelconque ;
- bien qu'ici la liaison entre le corps de la servovalve et la colonne soit de type pivot glissant, l'invention s'applique également à une liaison de type pivot simple ;
- bien qu'ici la première extrémité de la colonne soit reçue dans un logement de réception d'une fourrure rapportée sur le corps de la servovalve, l'invention s'applique également à une colonne reçue dans un logement de réception directement réalisé dans le corps de la servovalve ;
- bien qu'ici la colonne comprenne trois gorges de détente, l'invention s'applique également à une colonne comprenant un nombre diffèrent de gorges de détente comme par exemple, une, deux ou plus de trois ;
- bien qu'ici la colonne soit entourée d'un tube fin torsible, l'invention s'applique également à d'autres moyens élastiques de retour en position de repos comme par exemple un ressort à spires ou un manchon élastomère.

## Revendications

1. Servovalve (70 ;170) à étage de pilotage de type à jet comportant un éjecteur (20;120) pour éjecter un jet de fluide et qui est déplaçable en regard d'un déflecteur (6;106) apte à générer un différentiel de pression exploitable pour déplacer un organe de distribution de puissance (2) de la servovalve (70 ;170), l'éjecteur s'étendant radialement en saillie d'une colonne (21;121) s'étendant selon un axe longitudinal (X) et de laquelle l'éjecteur (20 ;120) est solidaire en étant en communication fluidique avec un conduit central(22;122) de la colonne (21 ;121) par lequel l'éjecteur (20 ; 120) est alimenté en fluide, la colonne (21 ; 121) ayant une première extrémité (23 ; 123) engagée dans une partie de la servovalve (70 ;170) à proximité d'une alimentation en pression de celle-ci et par laquelle le fluide est introduit dans le conduit central (22 ; 122) de la colonne (21 ; 121), la colonne (21 ; 121) ayant une deuxième extrémité (24 ; 124) soumise à la sollicitation d'un moteur couple (26;126) pour sélectivement appliquer sur la colonne (21 ;121) un couple de rotation de autour de l'axe longitudinal (X) dans un sens ou dans un autre par rapport à une position de repos, **caractérisée en ce que** la première extrémité (23, 123) est engagée de manière pivotante dans une partie de la servovalve (70, 170).

2. Servovalve (70 ; 170) selon la revendication 1, comprenant des moyens élastiques (190) de retour de la colonne (121) en position de repos.

3. Servovalve (70 ; 170) selon la revendication 2, dans laquelle les moyens élastiques (127) de retour en position comprennent un tube fin (190) entourant la colonne (121).

4. Servovalve selon la revendication 1, dans laquelle la première extrémité (23 ; 123) de la colonne (21) réalise une liaison pivot glissant avec un logement de réception (71) de ladite extrémité (23).

5. Servovalve (70 ; 170) selon la revendication 4, dans laquelle le logement de réception (71) est délimité par une fourrure (72) rapportée de manière étanche sur un corps (1) de la servovalve (70 ; 170).

6. Servovalve (70 ; 170) selon la revendication 5, dans laquelle la fourrure (72) est rapportée sur le corps de la servovalve (70 ; 170) par vissage.

7. Servovalve selon la revendication 5, dans laquelle la fourrure (72) comprend un joint statique (77).

8. Servovalve selon la revendication 1, dans laquelle la première extrémité (23) de la colonne (21) comprend au moins une gorge de détente (82).

9. Servovalve (70 ; 170) selon la revendication 3, dans laquelle la deuxième extrémité (24 ; 124) de la colonne est encastrée sur un pied (129) terminal du tube fin (190) entourant la colonne (121), le tube fin (190) étant solidaire d'une semelle (128) venant fermer à étanchéité une chambre (145) dans laquelle l'éjecteur (120) éjecte le fluide.

10. Servovalve (70 ; 170) selon la revendication 1, dans laquelle le moteur couple comprend une palette (150) ayant deux bras opposés qui sont soumis à l'action électromagnétique d'un aimant permanent (153), le moteur couple comportant deux bobines (157, 158) entourant chacune un bras de la palette et alimentée en opposition pour engendrer une polarisation opposée des bras de la palette de manière à créer sur la palette un couple.

## Patentansprüche

1. Servoventil (70; 170) mit Strahlrohr-Steuerstufe, umfassend einen Ejektor (20; 120) zum Ausstoßen eines Fluidstrahls, wobei der Ejektor gegenüber einem Deflektor (6; 106) verschiebbar ist, der dazu geeignet ist, eine Druckdifferenz zu erzeugen, die nutzbar ist, um ein Leistungsverteilungsorgan (2) des Servoventils (70; 170) zu verschieben, wobei der Ejektor radial von einer Säule (21; 121) absteht, die sich entlang einer Längsachse (X) erstreckt und mit der der Ejektor (20; 120) verbunden ist, indem er in Fluidverbindung mit einer zentralen Leitung (22; 122) der Säule (21; 121) steht, durch die der Ejektor (20; 120) mit Fluid versorgt wird, wobei die Säule (21; 121) ein erstes Ende (23; 123) hat, das mit einem Teil des Servoventils (70; 170) nahe einer Druckversorgung desselben in Eingriff steht und durch das das Fluid in die zentrale Leitung (22; 122) der Säule (21; 121) eingebracht wird, wobei die Säule (21; 121) ein zweites Ende (24; 124) hat, das der Beanspruchung eines Drehmomentmotors (26; 126) ausgesetzt ist, um auf die Säule (21; 121) selektiv ein Drehmoment um die Längsachse (X) in die eine oder die andere Richtung in Bezug auf eine Ruheposition aufzubringen, **dadurch gekennzeichnet, dass** das erste Ende (23; 123) drehbar mit einem Teil des Servoventils (70; 170) in Eingriff steht.

2. Servoventil (70; 170) nach Anspruch 1, umfassend elastische Mittel (190) zum Rückstellen der Säule (121) in die Ruheposition.

3. Servoventil (70; 170) nach Anspruch 2, bei dem die elastischen Mittel (127) zur Positionsrückstellung ein dünnes Rohr (190) umfassen, das die Säule (121) umgibt.

4. Servoventil nach Anspruch 1, bei dem das erste Ende (23; 123) der Säule (21) eine gleitende Drehverbindung mit einer Aufnahme (71) zur Aufnahme des genannten Endes (23) herstellt.

5. Servoventil (70; 170) nach Anspruch 4, bei dem die Aufnahme (71) von einer Auskleidung (72) begrenzt ist, die auf dichte Weise an einem Gehäuse (1) des Servoventils (70; 170) befestigt ist.

6. Servoventil (70; 170) nach Anspruch 5, bei dem die Auskleidung (72) an dem Gehäuse des Servoventils (70; 170) durch Festschrauben befestigt ist.

7. Servoventil (70; 170) nach Anspruch 5, bei dem die Auskleidung (72) eine statische Dichtung (77) umfasst.

8. Servoventil nach Anspruch 1, bei dem das erste Ende (23) der Säule (21) mindestens eine Expansionsnut (82) umfasst.

9. Servoventil (70; 170) nach Anspruch 3, bei dem das zweite Ende (24; 124) der Säule in einen Endfuß (129) des die Säule (121) umgebenden dünnen Rohres (190) eingefügt ist, wobei das dünne Rohr (190) mit einer Grundplatte (128) verbunden ist, die eine Kammer (145), in die der Ejektor (120) das Fluid ausstößt, auf dichte Weise verschließt.

10. Servoventil (70; 170) nach Anspruch 1, bei dem der Drehmomentmotor eine Schaufel (150) umfasst, die zwei entgegengesetzte Arme hat, die der elektromagnetischen Wirkung eines Dauermagneten (153) ausgesetzt sind, wobei der Drehmomentmotor zwei Spulen (157, 158) umfasst, die jeweils einen Arm der Schaufel umgeben und gegenphasig gespeist werden, um eine entgegengesetzte Polarisation der Arme der Schaufel zu erzeugen, um so an der Schaufel ein Drehmoment zu erzeugen.

## Claims

1. Servovalve (70; 170) with jet-type pilot stage including an ejector (20; 120) for ejecting a jet of fluid and that is movable relative to a deflector (6; 106) adapted to generate a pressure differential that can be used to move a power distribution member (2) of the servovalve (70; 170), the ejector projecting radially from a column (21; 121) extending along a longitudinal axis (X) and to which the ejector (20; 120) is fastened, the ejector being in fluid communication with a central passage (22; 122) of the column (21; 121) via which the ejector (20; 120) is fed with fluid, the column (21; 121) having a first end (23; 123) engaged in a part of the servovalve (70; 170) in the vicinity of a pressure feed thereof and via which the fluid is introduced into the central passage (22; 122) of the column (21; 121), the column (21; 121) having a second end (24; 124) loaded by a torque motor (26; 126) to apply selectively to the column (21; 121) a rotation torque about the longitudinal axis (X) in either direction relative to a rest position **characterized in that** the first end (23; 123) is pivotably engaged in a part of the servovale.

2. Servovalve (70; 170) according to Claim 1, including elastic means (190) for returning the column (121) to a rest position.

3. Servovalve (70; 170) according to Claim 2, wherein the position return elastic means (127) include a thin tube (190) surrounding the column (121).

4. Servovalve according to Claim 1, wherein the first end (23; 123) of the column (21) provides a sliding pivot connection with a housing (71) receiving said end (23).

5. Servovalve (70; 170) according to Claim 4, wherein the housing (71)receiving the first (23) of the column (21) is delimited by a sheath (72) mounted on and sealed with respect to a body (1) of the servovalve (70; 170).

6. Servovalve (70; 170) according to Claim 5, wherein the sheath (72) is screwed onto the body of the servovalve (70; 170).

7. Servovalve according to Claim 5, wherein the sheath (72) includes a static seal (77).

8. Servovalve according to Claim 1, wherein the first end (23) of the column (21) includes at least one expansion groove (82).

9. Servovalve (70; 170) according to Claim 3, wherein the second end (24; 124) of the column is built into a foot (129) at the end of the thin tube (190) surrounding the column (121), the thin tube (190) being fastened to a baseplate (128) that closes and seals a chamber (145) into which the ejector (120) ejects the fluid.

10. Servovalve (70; 170) according to Claim 1, wherein the torque motor includes a paddle (150) having two opposite arms that are subjected to the electromagnetic action of a permanent magnet (153), the torque motor including two windings (157, 158) each surrounding one arm of the paddle and energized oppositely to generate an opposite polarization of the arms of the paddle so as to create a torque on the paddle.
